# EUROPÄISCHE PATENTANMELDUNG

(11) **EP 1 205 524 A2**
(43) Veröffentlichungstag der Anmeldung: **15.05.2002**
(21) Anmeldenummer: 01125948.8
(22) Anmeldetag: 31.10.2001
(51) Int. Cl.: C09K 3/10, C09K 21/14

(54) **Verwendung einer Butyldichtungsmasse, enthaltend eine bei Temperaturen oberhalb 150 C aufschäumende Komponente, zu Brandschutzzwecken**

(30) Priorität: 07.11.2000 DE 10055151
(71) Anmelder: Chemetall GmbH, 60487 Frankfurt am Main (DE)
(72) Erfinder: Pöhlman, Thomas, Dr., 63843 Niedernberg (DE); Kraus, Peter, 63075 Offenbach (DE)
(74) Vertreter: Scherzberg, Andreas, Dr.

(57) **Zusammenfassung**

Beschrieben wird die Verwendung einer Butyldichtungsmasse, enthaltend Homo- und/oder Copolymere von Isobutylen und eine oder mehrere Komponenten, die durch chemische Reaktionen bei Temperaturen oberhalb von 150 °C flüchtige Bestandteile freisetzen, als Abdichtung, wobei die Abdichtung im Brandfall aufschäumt. Beschrieben wird weiterhin die Verwendung dieser Butyldichtungsmasse zur Herstellung von Brandschutzglas.

## Beschreibung

Die Erfindung betrifft die Verwendung einer Butyldichtungsmasse, die neben Homo- und/oder Copolymeren von Isobutylen eine oder mehrere bei Temperaturen oberhalb 150 °C aufschäumende Komponenten enthält, zu Brandschutzzwecken, insbesondere Brandschutzglas.

Brandschutzglas, wie es in der EP 0 590 978 A1 beschrieben ist, besteht aus wenigstens zwei Glastafeln, die am Rand über einen Abstandhalter, eine Butyldichtungsmasse und eine elastische Versiegelung miteinander verbunden sind. Im Zwischenraum der Glastafeln befindet sich ein wasserhaltiges, polymeres Brandschutzgel, das im Brandfall aufschäumt und den Wärmeübergang von der dem Brand zugewandten zu der abgewandten Seite verringert. Der üblicherweise verwendete Abstandhalter besteht aus Metallen (z.B. Aluminium, verzinkter Stahl, Edelstahl), Glas oder Keramik. Aufgrund der Steifheit der Materialien kann es zu mechanischen Spannungen im Glasrandbereich kommen. Zum einen kann dies zu einer unzureichenden Randabdichtung während des Befüll- und Aushärtevorgangs für die Brandschutzmasse führen, was mit einem Auslaufen der Brandschutzmasse verbunden wäre, und zum anderen kann es aufgrund der mechanischen Spannungen im Brandfall zu einem vorzeitigen Bruch des Brandschutzglases kommen. Im Fall der Verwendung von Metall als Abstandhaltermaterial führt die hohe Wärmeleitfähigkeit des Metalles überdies im Brandfall zu einem erhöhten Wärmeübergang und damit zu höheren Temperaturen im Randbereich des Brandschutzglases.

Um diesen Problemen zu begegnen, wird in der DE 198 27 867 C1 und in der EP 0 970 930 A2 vorgeschlagen, als Abstandhaltermaterial einen flexiblen Profilstrang aus Silikonkautschuk zu verwenden, der mittels eines Klebers (z.B. auf Acrylatbasis) mit den Glastafeln verbunden ist. Weiterhin ist vorgesehen, zwischen dem Abstandhalter und einer elastischen Außenversiegelung einen Strang aus einem bei Hitzeeinwirkung aufschäumenden Material einzulegen. Aufgrund der geringeren Wärmeleitfähigkeit von Silikonkautschuk und der Bildung eines Schaumes im Brandfall (dieser Schaum bildet sich im Randbereich des Brandschutzglases) wird der Wärmeübergang im Randbereich im Vergleich zu obigem Beispiel stark reduziert. Von Nachteil ist hierbei allerdings, dass vier verschiedene Materialien zur Randabdichtung von Brandschutzglas verwendet werden müssen, was den Fertigungsaufwand für Brandschutzglas stark erhöht. Überdies können die verwendeten Silikonkautschukprofile mit den Klebern auf Acrylatbasis (genannt werden Transferklebebänder) und die Profilstreifen aus dem aufschäumenden Material meist nur manuell aufgebracht werden.

Aufgabe der Erfindung ist es, eine Dichtungsmasse zu schaffen, die sich generell zu Abdichtungszwecken und insbesondere als Randabdichtung in Brandschutzglas verwenden lässt, wobei die Abdichtung im Brandfall generell eine wärmeisolierende Wirkung entfaltet und insbesondere als Randabdichtung in Brandschutzglas einerseits geringe mechanische Spannungen und eine geringe Wärmeleitfähigkeit im Glasrandbereich gewährleistet und wobei die Randabdichtung andererseits die genannten fertigungstechnischen Nachteile nicht aufweist.

Gelöst wird die Aufgabe durch die Verwendung einer auf Homo- und/oder Copolymeren von Isobutylen basierenden Butyldichtungsmasse, die eine oder mehrere Komponenten enthält, die durch chemische Reaktionen oberhalb von 150 °C flüchtige Bestandteile freisetzen. Im Brandfall schäumen diese flüchtigen Bestandteile die Butyldichtungsmasse auf. Unter chemischer Reaktion wird dabei nicht die Abspaltung von Hydrat- oder Kristallwasser, sondern eine Zersetzungsreaktion verstanden, bei der die aufschäumende Komponente eine chemische Umwandlung durchläuft und wobei andere flüchtige Bestandteile als Wasser freigesetzt werden.

Die erfindungsgemäß zu verwendende Butyldichtungsmasse enthält Homo- und/oder Copolymere von Isobutylen. Diese sind bekannt, großtechnisch verfügbar und in Dichtungsmassen weit verbreitet. Beispiele für Homopolymere von Isobutylen sind Produkte, die unter den Markennamen Oppanol (BASF AG), Vistanex (ExxonMobil Chemical) und Tetrax (Nippon Petrochemicals) vertrieben werden. Copolymere von Isobutylen sind erhältlich mit Isopren (im Regelfall mit einem Isoprengehalt bis zu 3 Mol%) als Comonomer (Butylkautschuk z.B. von Bayer AG, ExxonMobil Chemical) oder mit para-Methylstyrol als Comonomer und können nachträglich noch modifiziert werden. Die Modifizierung kann beispielsweise die Halogenierung, eine Teilvernetzung und eine Reaktion mit Maleinsäureanhydrid oder mit Silanen umfassen. So lassen sich durch Halogenierung von Butylkautschuk mit Chlor oder Brom die entsprechenden Halobutyle und von Poly(isobutylen-co-para-methylstyrol) das Terpolymer Poly(isobutylen-co-para-methylstyrol-co-para-brommethylstyrol) (Handelsname EXXPRO der ExxonMobil Chemical) herstellen. Teilvernetzte Typen mit Vernetzungsgraden bis zu 80 % sind ebenfalls großtechnisch im Einsatz; Beispiele sind Polysar Butyl XL von Bayer AG, Kalar von Hardman und LC Butyl von ExxonMobil Chemical. Die Butyldichtungsmasse kann auch Mischungen der Homo- und Copolymeren von lsobutylen enthalten.

Als aufschäumende Komponente kommen organische oder anorganische Stoffe in Betracht, die durch chemische Reaktionen oberhalb von 150 °C flüchtige Bestandteile abspalten. Flüchtige Bestandteile können z.B. sein: Ammoniak, Amine, Schwefeldioxid, Phosphorsäure, Kohlenmonoxid und Kohlendioxid. Die Abspaltung der flüchtigen Bestandteile beginnt bei Temperaturen oberhalb von 150 °C, das Maximum der Zersetzung der flüchtige Bestandteile enthaltenden Komponente liegt allerdings im allgemeinen bei höheren Temperaturen. Verbindungen, die Kristall- und Hydratwasser beinhalten und dieses bei höheren Temperaturen in Form von Wasserdampf abspalten, sind als aufschäumende Komponente weniger geeignet, da diese Verbindungen in der Regel eine niedrige Zersetzungstemperatur und einen hohen Wasserdampfdruck und damit unter Produktions- und Verarbeitungsbedingungen (Misch- und Verarbeitungstemperaturen über 100 °C, ggf. Entgasen der Mischung während des Fertigungsprozesses unter Vakuum, z.B. zwischen 10 und 100 mbar) eine zu hohe Flüchtigkeit aufweisen.

Stoffe, die oberhalb von 150 °C flüchtige Bestandteile abspalten, können z.B. sein: Natriumhydrogencarbonat, Kaliumhydrogencarbonat, Ammoniumsulfat, Diammoniumhydrogenphosphat, Ammoniumdihydrogenphosphat, Ammoniummetaphosphat, Ammoniumpolyphosphat, Melaminpyrophosphat, Dinatriumhydrogenphosphat, Natriumdisulfit und Calciumoxalat.

Eine bevorzugt zu verwendende Butyldichtungsmasse enthält zusätzlich verstärkende und/oder nichtverstärkende Füllstoffe und Stabilisatoren.

Beispiele für verstärkende und nichtverstärkende Füllstoffe sind Ruß, gefällte oder pyrogene Kieselsäure, gefällte oder gemahlene Kreide (auch oberflächenbehandelt), Ton, Kaolin, Talkum, Quarz, Titandioxid, Schwerspat, Glasfasern, Kohlenstofffasern, Graphit, Aluminium- und Zinkpulver. Die Füllstoffe können auch wasserbindende Füllstoffe umfassen, wenn bei der Verwendung der Butyldichtungsmasse zur Herstellung von Brandschutzglas keine negativen Auswirkungen auf das im Brandschutzglas enthaltene meist wasserhaltige Brandschutzgel erwartet werden. Wasserbindende Füllstoffe können beispielsweise sein Kieselgel, Calciumoxid oder Zeolithe mit definierten Porendurchmessern (z.B. 3, 4 oder 10 Å). Es können auch Mischungen der verstärkenden und nichtverstärkenden, auch wasserbindenden Füllstoffe eingesetzt werden.

Stabilisatoren können beispielsweise Antioxidantien vom Typ der sterisch gehinderten Phenole (z.B. Tetrakis[methylen-3-(3,5-di-tert-butyl-4-hydroxyphenyl)propionat]methan) oder vom Typ der schwefelbasierenden Antioxidantien wie Mercaptane, Sulfide, Polysulfide, Thioharnstoff, Mercaptale, Thioaldehyde, Thioketone usw. sein. Diese Stoffe können entweder alleine oder in Mischungen eingesetzt werden.

Die erfindungsgemäß zu verwendende Butyldichtungsmasse kann zusätzlich einen oder mehrere der folgenden Inhaltsstoffe enthalten: thermoplastische Polymere, natürliche und/oder synthetische Kautschuke, klebrigmachende Zusätze, haftvermittelnde Substanzen.

Beispiele für thermoplastische Polymere sind Homo- und Copolymere von Olefinen (wie Ethylen, Propylen, Buten-Isomere und deren höhere Homologe), von funktionellen Vinylverbindungen (wie Vinylacetat, Vinylchlorid, Styrol, α-Methylstyrol) und von ungesättigten Säurederivaten (wie Acrylsäure, Methacrylsäure, Acrylate, Methacrylate, Acrylnitril). Außerdem können in den thermoplastischen Polymeren enthalten sein Polyamide, Polyimide, Polyacetale, Polycarbonate, Polyester und Polyurethane. Es können auch Mischungen der thermoplastischen Polymere eingesetzt werden. Die thermoplastischen Polymere können auch modifiziert sein, z.B. durch Einbau von Maleinsäureanhydrid-, Carboxylat- oder Silylgruppen.

Natürliche und synthetische Kautschuke können ausgewählt werden aus der Gruppe der Homopolymeren von Dienen und der Gruppe der Co- und Terpolymeren von Dienen mit Olefinen. Beispiele sind Polybutadien, Polyisopren, Polychloropren, Styrol-Butadien-Kautschuk, Blockcopolymere mit Blöcken aus Styrol und Butadien oder Isopren, Ethylen-Propylen-Kautschuk und Ethylen-Propylen-Dien-Kautschuk beispielsweise mit Dicyclopentadien oder Ethylidennorbornen als Dien-Komponente. Die Kautschuke können auch in hydrierter oder anderweitig modifizierter Form und auch in Mischungen eingesetzt werden.

Klebrigmachende Zusätze können ausgewählt werden aus der Gruppe der natürlichen und synthetischen, auch nachträglich modifizierten Harze, die unter anderem Kohlenwasserstoffharze, Kolophonium und dessen Derivate, Polyterpene und deren Derivate, Cumaron-Indenharze, Phenolharze und Acrylatharze umfassen, und aus der Gruppe der nieder- bis mittelmolekularen Polybutene, Polyisobutylene und abgebauten flüssigen Kautschuke (z.B. Butylkautschuk oder EPDM), die auch hydriert sein können. Es können auch Mischungen der aufgeführten klebrigmachenden Zusätze eingesetzt werden.

Haftvermittelnde Substanzen können ausgewählt werden aus der Gruppe der Silane, die beispielsweise 3-Glycidyloxypropyl-trialkoxysilan, 3-Aminopropyltrialkoxysilan, N-Aminoethyl-3-aminopropyl-trialkoxysilan, 3-Methacryloxypropyltrialkoxysilan, Vinyl-trialkoxysilan, iso-Butyl-trialkoxysilan, 3-Mercaptopropyltrialkoxysilan umfassen können, aus der Gruppe der Kieselsäureester, z.B. Tetraalkylorthosilikate, und aus der Gruppe der Metallate, z.B. Tetraalkyltitanate oder Tetraalkylzirkonate. Es können auch Mischungen der aufgeführten haftvermittelnden Substanzen eingesetzt werden.

Die erfindungsgemäß zu verwendende Butyldichtungsmasse kann die angeführten Komponenten in folgenden Anteilen enthalten (Angaben in Gew.-%):

| | |
|---|---|
| a) Homo- und/oder Copolymere von Isobutylen | 5 - 95% |
| b) Aufschäumende Komponente | 5 - 95% |
| c) Verstärkende und/oder nichtverstärkende Füllstoffe | 0 - 60% |
| d) Stabilisatoren | 0- 5% |
| e) Thermoplastische Polymere | 0 - 40% |
| f) Natürliche und/oder synthetische Kautschuke | 0 - 40% |
| g) Klebrigmachende Zusätze | 0 - 30% |
| h) Haftvermittelnde Substanzen | 0- 10% |

Vorzugsweise kann die Butyldichtungsmasse die Komponenten in folgenden Anteilen enthalten (Angaben in Gew.-%):

| | |
|---|---|
| a) Homo- und/oder Copolymere von Isobutylen | 10 - 80% |
| b) Aufschäumende Komponente | 10 - 70% |
| c) Verstärkende und/oder nichtverstärkende Füllstoffe | 5 - 50% |
| d) Stabilisatoren | 0,05 - 3% |
| e) Thermoplastische Polymere | 0 - 30% |
| f) Natürliche und/oder synthetische Kautschuke | 0 - 30% |
| g) Klebrigmachende Zusätze | 0 - 25% |
| h) Haftvermittelnde Substanzen | 0 - 8% |

Die erfindungsgemäß zu verwendende Butyldichtungsmasse wird hergestellt durch Mischen der Inhaltsstoffe in einem geeigneten Aggregat, z.B. einem Kneter oder einem Ein- bzw. Zweischneckenextruder, unter Einfluss von hohen Scherkräften, wobei Temperaturen von 100 bis 280 °C, bevorzugt von 120 bis 250 °C erreicht werden. Optional kann der Mischvorgang unter Schutzgas oder Vakuum durchgeführt werden.

Die Butyldichtungsmasse kann zur Herstellung von Brandschutzglas verwendet werden und dabei mehrere Aufgaben erfüllen:
- Abstandhalter zwischen den Glastafeln des Brandschutzglases;
- Abdichtung des Scheibeninneren gegen Auslaufen der nicht gehärteten Brandschutzmasse bis zur optionalen vollständigen Vernetzung zu einem Gel;
- Sperre gegen austretendes Wasser aus der Brandschutzmasse;
- Im Brandfall Kühlung und Isolierung der dem Brand abgekehrten Glastafel durch Aufblähung und Freisetzung flüchtiger Bestandteile;
- Im Brandfall unter Umständen mechanische Stabilisierung des Brandschutzglases im Rahmen und Verringerung des Wärmeübergangs im Rahmen.

Ein Verfahren zur Herstellung von Brandschutzglas unter Verwendung der Butyldichtungsmasse als Randabdichtung kann z.B. wie folgt ausgeführt werden:
- Applikation der Butyldichtungsmasse auf den Randbereich einer Glastafel mittels einer geeigneten Apparatur (z.B. Extruder oder Fasspumpe);
- Auflegen einer zweiten Glastafel auf die Butyldichtungsmasse;
- Verpressung der Einheit auf die vorgegebene Dicke;
- optional Wiederholung der Verfahrensschritte bei Brandschutzglas mit mehr als zwei Glastafeln;
- optional Füllung einer Fuge im Randbereich des Brandschutzglases mit einer aushärtbaren, pastösen, standfesten Versiegelungsmasse, die im ausgehärteten Zustand elastische Eigenschaften und gute Glashaftung aufweist;
- Füllung des Scheibeninneren des Brandschutzglases mit einer Brandschutzmasse, die, je nach verwendeter Brandschutzmasse, ggf. zu einem Gel ausgehärtet wird.

Von Vorteil der erfindungsgemäß zu verwendenden Butyldichtungsmasse ist die geringe Wasserdampfdurchlässigkeit der Homo- und Copolymeren des Isobutylens im Vergleich zu Silikonkautschuk. Die geringe Wasserdampfdurchlässigkeit bewirkt bei der Verwendung der Butyldichtungsmasse als Randabdichtung bei der Herstellung von Brandschutzglas, dass das im Scheibenzwischenraum befindliche wasserhaltige Brandschutzgel keine Wasseranteile verliert und damit nicht langfristig seine Funktionsfähigkeit einbüßt.

Bevorzugt dient die Butyldichtungsmasse auch als Abstandhalter, so dass ein vorgeformter Abstandhalter aus Metall, Glas, Keramik oder Kautschuk nicht mehr notwendig ist. Die im Brandfall aufschäumende Butyldichtungsmasse kann mittels eines geeigneten Applikators (z.B. TPS-Applikator der Firma Lenhardt Maschinenbau GmbH) automatisch in Form eines Dichtungsstranges auf den Randbereich einer Glastafel aufgetragen werden. Anschließend wird eine zweite Glastafel aufgelegt, und der Glastafelverbund wird auf den gewünschten Abstand verpresst. Eine zwischen den Glastafeln und der Butyldichtungsmasse ausgebildete Randfuge kann mit einer aushärtbaren, pastösen, standfesten Versiegelungsmasse gefüllt werden, die im ausgehärteten Zustand elastische Eigenschaften und eine gute Glashaftung aufweist. Über Einfüllöffnungen kann in bekannter Art und Weise in den Scheibenzwischenraum eine Brandschutzmasse eingefüllt werden. Handelt es sich um eine auszuhärtende Brandschutzmasse, wird diese nach Verschluss der Einfüllöffnung ausgehärtet. Eine Brandschutzmasse, die hier Verwendung finden kann, ist in WO 94/04355 beschrieben.

Die erfindungsgemäße Verwendung der Butyldichtungsmasse als Randabdichtung hat den Vorteil, dass die relativ weiche Butyldichtungsmasse mit den aufschäumenden Bestandteilen im Vergleich zu den üblicherweise verwendeten starren Abstandhaltern aus Metall, Glas oder Keramik geringere mechanische Spannungen im Glasrandbereich verursacht und eine geringere Wärmeleitfähigkeit als Metallabstandhalter aufweist. Weiterhin kann die Butyldichtungsmasse mittels automatischer Applikationstechnik aus einem Vorratsbehälter (z.B. Fass mit 200 Liter Inhalt) über geeignete Fördermöglichkeiten (z.B. Folgeplatte, Zahnradpumpe) bei Temperaturen über 100 °C.in geeignete variable Formen extrudiert werden. Im Brandfall wird die Entstehung zu großer Temperaturgradienten zwischen den Randbereichen beider Seiten des Brandschutzglases stark vermindert, weil die Butyldichtungsmasse eine wesentlich geringere Wärmeleitfähigkeit als Metall hat und die aufschäumenden Bestandteile für eine Kühlung und eine thermische Isolierung der dem Brand abgewandten Seite sorgen. Außerdem können durch den beim Aufschäumen entstehenden Druck die Butyldichtungsmasse und eine evtl. vorhandene elastische Versiegelung nach außen in den Glasfalzraum des Einbaurahmens des Brandschutzglases gepresst werden und somit eine weitere mechanische Stabilisierung des Brandschutzglases und Verringerung des Wärmeübergangs im Rahmen bewirken. Der Gegenstand der Erfindung wird anhand des folgenden Beispiels näher erläutert:

### Beispiele 1 bis 3: Herstellung einer aufschäumende Bestandteile enthaltenden Butyldichtungsmasse und Erhitzen der Masse

In einem auf 130°C geheizten Kneter wurden 1092,5 g (47,5%) Polyisobutylen (Vistanex LM-H von der Firma ExxonMobil) und 57,5 g (2,5%) Butylkautschuk (Butyl 065 von der Firma ExxonMobil) mit 418,6 g (18,2%) Ruß (Corax N 330 von der Firma Degussa), 616,4 g (26,8%) eines im Brandfall aufschäumenden Bestandteils, 110,4 g (4,8%) Talkum (Fintalc M10 von der Firma Omya) und 4,6 g (0,2%) Stabilisator Tetrakis[methylen-3-(3,5-di-tert-butyl-4-hydroxyphenyl)propionat]methan (Ralox 630 von der Firma Raschig) für 60 Minuten geknetet. Dann wurde 2 Stunden bei 130°C Vakuum angelegt und anschließend die Masse aus dem Kneter ausgetragen.

Als im Brandfall aufschäumender Bestandteil wurde im **Beispiel 1** Calciumoxalat, im **Beispiel 2** Ammoniumdihydrogenphosphat und im **Beispiel 3** Ammoniumpolyphosphat verwendet.

Die so hergestellte Butyldichtungsmassen wurden in den Beispielen 1 und 2 auf ca. 250 °C, im Beispiel 3 auf 350 °C erhitzt. Im Beispiel 1 zersetzte sich der aufschäumende Bestandteil Calciumoxalat unter Freisetzung des flüchtigen Bestandteils Kohlenmonoxid, in den Beispielen 2 und 3 zersetzten sich die aufschäumenden Bestandteile Ammoniumdihydrogenphosphat und Ammoniumpolyphosphat jeweils unter der Bildung von flüchtigem Ammoniak. Im Butyldichtstoff bildete sich in allen Beispielen eine Porenstruktur aus, und das Volumen des Butyldichtstoffes nahm zu.

## Patentansprüche

1. Verwendung einer Butyldichtungsmasse, enthaltend Homo- und/oder Copolymere von Isobutylen und eine oder mehrere Komponenten, die durch chemische Reaktionen bei Temperaturen oberhalb von 150 °C flüchtige Bestandteile freisetzen, als Abdichtung, wobei die Abdichtung im Brandfall aufschäumt.

2. Verwendung einer Butyldichtungsmasse nach Anspruch 1, **dadurch gekennzeichnet, dass** die flüchtigen Bestandteile Ammoniak, Amine, Schwefeldioxid, Phosphorsäure, Kohlenmonoxid und/oder Kohlendioxid sind.

3. Verwendung einer Butyldichtungsmasse nach Anspruch 1 oder 2, **dadurch gekennzeichnet, dass** die flüchtige Bestandteile freisetzende Komponente ausgewählt wird aus einem oder mehreren der Stoffe Natriumhydrogencarbonat, Kaliumhydrogencarbonat, Ammoniumsulfat, Diammoniumhydrogenphosphat, Ammoniumdihydrogenphosphat, Ammoniummetaphosphat, Ammoniumpolyphosphat, Melaminpyrophosphat, Dinatriumhydrogenphosphat, Natriumdisulfit und Calciumoxalat.

4. Verwendung einer Butyldichtungsmasse nach einem der Ansprüche 1 bis 3, **dadurch gekennzeichnet, dass** die Butyldichtungsmasse zusätzlich verstärkende und/oder nichtverstärkende Füllstoffe und Stabilisatoren enthält.

5. Verwendung einer Butyldichtungsmasse nach einem der Ansprüche 1 bis 4, **dadurch gekennzeichnet, dass** die Butyldichtungsmasse zusätzlich einen oder mehrere der folgenden Inhaltsstoffe enthält:
thermoplastische Polymere,
natürliche und/oder synthetische Kautschuke,
klebrigmachende Zusätze,
haftvermittelnde Substanzen.

6. Verwendung einer Butyldichtungsmasse nach einem der Ansprüche 1 bis 5 als Randabdichtung bei der Herstellung von Brandschutzglas.

7. Verwendung nach Anspruch 6, **dadurch gekennzeichnet, dass** die Butyldichtungsmasse als Randabdichtung und als Abstandhalter dient.

8. Verwendung nach Anspruch 6 oder 7, **dadurch gekennzeichnet, dass** die Butyldichtungsmasse auf den Randbereich einer Glastafel aufgetragen wird, darauf eine zweiten Glastafel aufgelegt wird, danach der Glastafelverbund auf die vorgegebene Dicke verpresst wird und anschließend das Füllen des Scheibenvolumens mit einer Brandschutzmasse erfolgt.

9. Verwendung nach Anspruch 8, **dadurch gekennzeichnet, dass** die Brandschutzmasse zu einem Brandschutzgel aushärtet.

10. Verwendung nach einem der Ansprüche 6 bis 9, **dadurch gekennzeichnet, dass** eine zwischen den Glastafeln und der Butyldichtungsmasse ausgebildete Randfuge mit einer aushärtbaren, pastösen, standfesten Versiegelungsmasse gefüllt wird.

11. Verwendung nach Anspruch 10, **dadurch gekennzeichnet, dass** die aushärtbare, pastöse, standfeste Versiegelungsmasse ausgewählt wird aus der Gruppe der Polysulfid-, Polyurethan- und Silikondichtungsmassen.

12. Verwendung nach einem der Ansprüche 6 bis 11, **dadurch gekennzeichnet, dass** das Brandschutzglas aus mehr als 2 Glastafeln besteht.

13. Brandschutzglas, **dadurch gekennzeichnet, dass** es als Randabdichtung eine Butyldichtungsmasse entsprechend der Verwendung nach einem der Ansprüche 6 bis 12 enthält.
